# EUROPÄISCHE PATENTSCHRIFT

(11) **EP 2 487 541 B1**
(45) Veröffentlichungstag und Bekanntmachung des Hinweises auf die Patenterteilung: **31.07.2019**
(21) Anmeldenummer: 12002548.1
(22) Anmeldetag: 23.08.2006
(51) Int. Cl.: G03B 42/08, G01T 1/29, G02B 26/10

(54) **Gerät zum Auslesen belichteter Bildaufzeichnungsfolien**
Device for reading exposed image recording plates
Appareil de lecture de feuilles d'enregistrement des images

(30) Priorität: 27.09.2005 DE 102005046249
(43) Veröffentlichungstag der Anmeldung: 15.08.2012
(62) Teilanmeldung aus: 06777022.2
(73) Patentinhaber: Thoms, Michael, 91054 Erlangen (DE)
(72) Erfinder: Thoms, Michael, 91054 Erlangen (DE); Nowacek, Wilhelm, 74389 Cleebronn (DE); Alzner, Edgar, Garden City, NY 11530 (US); Gross, Walter, Masspequa, NY 11758 (US)
(74) Vertreter: Meissner Bolte Partnerschaft mbB

(56) Entgegenhaltungen:
- JP-A- 8 062 746
- US-A- 4 400 619
- US-A- 4 727 252
- US-A- 4 754 145
- US-A- 4 816 678
- US-A- 5 095 209
- US-A- 5 237 177
- US-A1- 2004 169 152
- US-A1- 2005 156 126
- US-A1- 2005 205 813

## Beschreibung

Die Erfindung betrifft ein Gerät zum Auslesen belichteter Speicherfolien gemäß dem Oberbegriff des Anspruches 1.

Belichtete Speicherfolien enthalten in Form lokal angeregter metastabiler Anregungszustände von Farbzentren ein latentes Röntgenbild, welches man dadurch erhält, dass man die Speicherfolie hinter einem Objekt in von einer Röntgenquelle erzeugtes Röntgenlicht stellt.

Dieses latente Bild, wird dadurch ausgelesen, dass man die Speicherfolie Punkt für Punkt mit einem Auslesestrahl kleinen Durchmessers abtastet. Die Wellenlänge des Ausleselichtes ist so gewählt, dass es ein metastabiles angeregtes Zentrum in einen höheren elektronischen Zustand anregt, der rasch unter Fluoreszenz zerfällt.

Das so ausgesandte Fluoreszenzlicht wird mit einer Detektionseinrichtung, welche zum Beispiel einen Fotomultiplier als lichtempfindliches Element enthalten kann, gemessen. Aus dem elektrischen Ausgangssignal des Detektionsmittels und elektrischen Signalen, welche die momentane Stellung des Auslesestrahles wiedergeben, kann man dann ein durch elektrische Signale ausgedrücktes Bild der Durchstrahlung des Objektes erhalten.

Ein Vorteil der Speicherfolien gegenüber herkömmlichen Röntgenfilme ist der, dass die Speicherfolien oft wiederbenutzt werden können. Da beim Auslesevorgang auf Grund der nur kurzen lokalen Belichtung durch den Auslesestrahl einige der angeregten Elektronenzustände der Zentren zurückbleiben, ist es notwendig, die Speicherfolie vor zurückbleiben, ist es notwendig, die Speicherfolie vor einer neuen Aufnahme dadurch sicher zu löschen, dass man sie intensiv und längere Zeit mit Löschlicht bestrahlt. Wird dies versäumt, kann ein Schatten des vorhergehenden Röntgenbildes auf dem nächsten Röntgenbild erscheinen.

Bekannte Geräte sind in den Dokumenten US5095209A, US5237177A und US4727252A gezeigt.

Die bisher verwendeten Löscheinrichtungen für Speicherfolien sind getrennte Geräte, in welche die Speicherfolien dann gegeben werden, wenn sie das Auslesegerät verlassen haben. Im Hinblick auf die hohen Kosten der Speicherfolien und die große Anzahl von Röntgenaufnahmen, die in Krankenhäusern und ähnlichen Einrichtungen gemacht werden, ist es vorteilhaft, wenn eine Speicherfolie nach Auslesen des latenten Bildes möglichst rasch wieder zur Verfügung steht.

Zur Lösung dieser Aufgabe wird durch die vorliegende Erfindung ein Gerät zum Auslesen belichteter Speicherfolien angegeben, bei welchem das Löschen von Resten des latenten Bildes, die nach dem Auslesen verbleiben, im Wesentlichen zeitgleich mit dem Auslesen erfolgt. Merkmale eines solchen Gerätes sind im Anspruch 1 angegeben.

Vorteilhafte Weiterbildungen der Erfindung sind Gegenstand von Unteransprüchen.

Mit der Weiterbildung der Erfindung gemäß des Anspruches 2 wird erreicht, dass bei geringer Abmessung der Lichtsperre in Förderrichtung der Speicherfolie eine sehr zuverlässige Lichtabschottung zum Lesekopf erhalten wird. Derartige geringe Abmessungen in Förderrichtung der Speicherfolien sind deshalb von Interesse, da man so den Löschkopf sehr nahe beim Lesekopf vorsehen kann. Hierdurch wird die für das Auslesen und Löschen insgesamt benötigte Zeit im Gerät nur unwesentlich größer gegenüber derjenigen Zeitspanne, die für das Auslesen der Speicherfolie allein benötigt wird.

Beim Löschen von Resten des latenten Bildes entsteht beim Löschkopf auch Fluoreszenzlicht. Mit der Weiterbildung der Erfindung gemäß Anspruch 3 ist gewährleistet, dass nicht nur kein Löschlicht, sondern auch kein Fluoreszenzlicht vom Bereich des Löschkopfes in den Bereich des Lesekopfes gerät, wo hierdurch das Auslesen nachfolgender Bildbereiche gestört werden könnte.

Bei einer Lichtsperre, wie sie im Anspruch 4 angegeben ist, hat man dünne absorbierende Räume, welche sich von der Förderfläche der Speicherfolie wegerstrecken und die zur Speicherfolie weisenden freien Ränder der Lamellen nur klein, so dass man nur wenig Reflexionen dort erhält.

Mit der Weiterbildung der Erfindung gemäß Anspruch 5 wird eine Reflexion an den freien Rändern der Lamellen nochmals verkleinert.

Eine Lichtsperre, wie sie im Anspruch 6 angegeben ist, lässt sich sehr einfach durch Bilden eines Stapels aus zwei unterschiedlichen Lamellentypen herstellen.

Dabei ist mit der Weiterbildung der Erfindung gemäß Anspruch 7 gewährleistet, dass auch dann, wenn die absorbierend ausgestalteten, z. B. mit schwarzem Lack überzogenen Oberflächen der Lamellen noch etwas Licht reflektieren, durch die Tiefe der zwischen den Lamellen liegenden flachen Taschen insgesamt eine gute Absorption gewährleistet ist.

Bei einer Lichtsperre, die gemäß Anspruch 8 ausgebildet ist, kann man den zwischen den Lamellen liegenden flachen Taschen ein Kühlgas zuführen und so die bei der Absorption von Licht entstehende Wärme gut abführen. Auch wird so verhindert, dass sich in diesen flachen Taschen Verunreinigungen wie Staub absetzen, die im Laufe der Zeit Zentren für die Reflexion von Licht bilden könnten.

Gemäß Anspruch 9 kann man einen Lamellenstapel unter Verwendung nur eines Typs von Lamellen auf sehr einfache Weise herstellen.

Dabei ist gemäß Anspruch 10 gewährleistet, dass die Lamellen nicht gegeneinander verkippen und sehr produzierbar und sicher hintereinander gestapelt sind.

Die Weiterbildung der Erfindung gemäß Anspruch 11 ist im Hinblick auf gute Wärmeabfuhr von der Lichtsperre von Vorteil.

Eine Lichtsperre, wie sie im Anspruch 12 angegeben ist, genügt für viele Fälle den Anforderungen. Sie ist besonders preisgünstig und einfach herstellbar.

Mit der Weiterbildung gemäß Anspruch 13 wird dabei erreicht, dass dann, wenn man den Flor der Lichtsperre besonders nahe bei der Bahn der Speicherfolien anordnet, etwaige zufällige Berührungen der Enden der Florschlingen keine Kratzer auf der Folienoberfläche hinterlassen.

Die Weiterbildung der Erfindung gemäß Anspruch 14 ist im Hinblick auf möglichst vollständige Absorption von Löschlicht und Fluoreszenzlicht von Vorteil.

Behandelt man die einzelnen Florfasern gemäß Anspruch 15, so sind Restreflexionen an der Faseroberfläche weitgehend ausgeräumt.

Gleiches gilt für Fasermaterial nach Anspruch 16.

Eine Löschlichtquelle gemäß Anspruch 17 zeichnet sich durch geringe Wärmentwicklung aus.

Eine Löschlichtquelle gemäß Anspruch 18 zeichnet sich durch geringen Energieverbrauch und kompakte Abmessungen sowie lange Lebensdauer aus.

Die Weiterbildungen gemäß den Ansprüchen 19 und 20 gewährleisten eine gleichförmige Löschung der Speicherfolie.

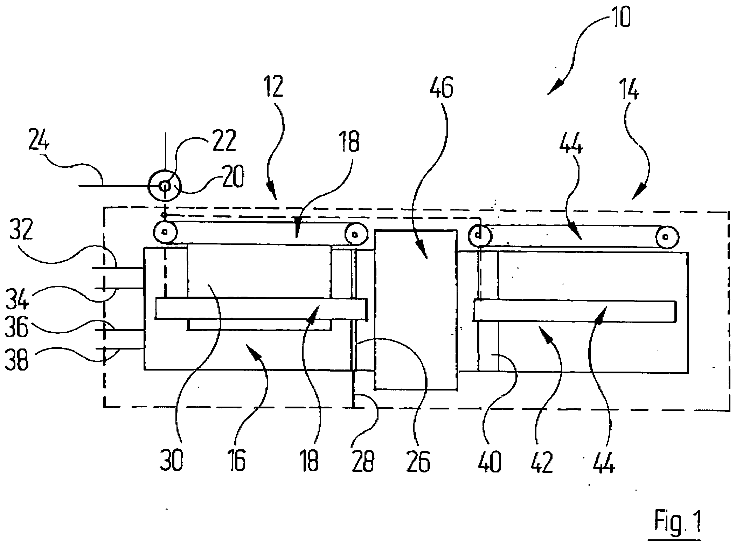

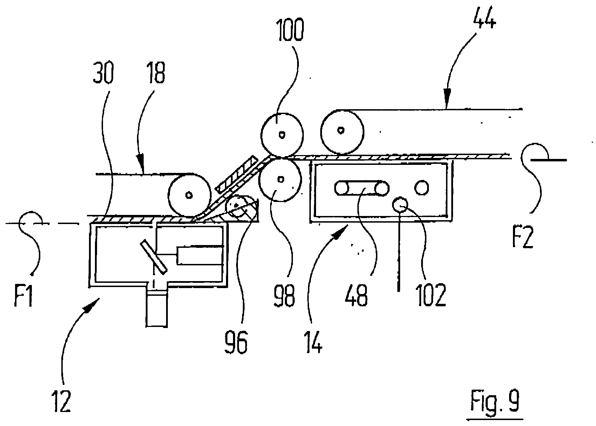

Nachstehend wir die Erfindung anhand von Ausführungsbeispielen unter Bezugnahme auf die Zeichnung näher erläutert. Figur 9 zeigt hierbei ein erfindungsgemäßes Ausführungsbeispiel mit Stufe im Förderweg der Speicherfolie. Das Ausführungsbeispiel nach Figur 1 dient lediglich der Erläuterung, ist jedoch nicht erfindungsgemäß, da es keine Stufe aufweist. Es zeigen:
- Figur 1:: eine schematische seitliche Ansicht eines kombinierten Gerätes zum Auslesen und gleichzeitigen Löschen der lichtempfindlichen Schicht einer Speicherfolie;
- Figur 2:: einen axialen Schnitt durch eine Lichtsperre, die zwischen dem Löschkopf und dem Lesekopf des kombinierten Gerätes nach Figur 1 angeordnet ist;
- Figur 3:: eine vergrößerte Aufsicht auf einen ersten Typ von Ringlamellen, der beim Aufbau der Lichtsperre nach Figur 2 verwendet wird;
- Figur 4:: eine Aufsicht auf einen zweiten ringförmigen Lamellentyp, der beim Aufbau der Lichtsperre 5 nach Figur 2 verwendet wird;
- Figur 5:: eine Aufsicht auf einen weiteren abgewandelten Typ einer ringförmigen Lamelle, aus welcher sich ein Stapel beabstandeter Abschirmlamellen herstellen lässt;
- Figur 6:: einen axialen Schnitt durch eine abgewandelte Licht sperre;
- Figur 7:: einen transversalen Schnitt durch einen absorbierenden textilen Faden;
- Figur 8:: eine seitliche, teilweise geschnittene Ansicht einer LED-Löschlichtquelle und eines Antriebes für diese; und
- Figur 9:: eine seitliche Ansicht eines abgewandelten Auslesegerätes vom Typ Flachbett-Scanner.

In Figur 1 ist mit 10 insgesamt ein kombiniertes Gerät zum Auslesen und Löschen von belichteten Speicherfolien bezeichnet. Es besteht aus einer insgesamt mit 12 bezeichneten Ausleseeinheit und einer insgesamt mit 14 bezeichneten Löscheinheit.

Die Ausleseeinheit 12 umfasst einen Aufspanntisch 16, der zylindrische Form aufweist und drei um den Umfang des Aufspanntisches herum verteilte Bandförderer 18, die untereinander mechanisch gekoppelt und mit der Ausgangswelle eines Elektromotors 20 verbunden sind. Der Elektromotor 20 ist seinerseits mit einem Stellungsgeber 22 verbunden. Dieser stellt sein Ausgangssignal auf einer Leitung 24 bereit.

Der Aufspanntisch 16 hat einen in Umfangsrichtung verlaufenden Ringspalt 26, durch den ein umlaufender Lesestrahl 28 austritt. Es handelt sich hierbei um Laserlicht mit einer Wellenlänge wie sie zum weiteren Anregen eines metastabil angeregten Zentrums einer Speicherfolie geeignet ist. Bezüglich Einzelheiten des Lesekopfes wird auf die WO 01/18796 A1 verwiesen.

In der Zeichnung ist mit 30 eine belichtete Speicherfolie angedeutet, die mit ihrer lichtempfindlichen Schicht nach unten auf dem Aufspanntisch 16 angeordnet ist. Sie wird dabei durch die drei in Umfangsrichtung verteilten Bandförderer 18 in zylindrischer Geometrie gehalten. Zugleich bewegen die Bandförderer 18 die Speicherfolie 30 in Figur 1 nach rechts und über den Ringspalt 26 hinweg. Dabei werden die gerade über den Ringspalt liegenden Bildpunkte des latenten Bildes durch den umlaufenden Lichtstrahl 28 ausgelesen.

Die Ausleseeinheit 12 erhalt über eine Leitung 32 eine Betriebsspannung zur Versorgung der verschiedenen in ihr enthaltenen Verbraucher und gibt über eine Leitung 34 ein der momentanen Winkelstellung des Lesestrahles 28 entsprechendes elektrisches Signal und über eine Leitung 36 das Ausgangssignal eines in ihr enthaltenen Fotomultipliers ab.

Der mit dem Elektromotor 20 gekoppelte Stellungsgeber 22 gibt ein Ausgangssignal ab, welches der Stellung der Speicherfolie 30 bezüglich des Ringspaltes 26 entspricht.

Aus den auf den Leitungen 24, 34 und 36 stehenden elektrischen Signalen lässt sich dann das elektronische Abbild des latenten Röntgenbildes erzeugen, wie in der WO 01/19796 A1 näher beschrieben.

Die Löscheinheit 14 hat ein in Umfangsrichtung verlaufenden breites transparentes Austrittsfenster 40 für Löschlicht, dessen Außenfläche eine glatte Fortsetzung eines Aufspanntisches 42 darstellt. Um den Aufspanntisch 42 herum verteilt sind Bandförderer 44 angeordnet, die untereinander und mit den Bandförderern 18 mechanisch gekoppelt sind.

Aus dem ringförmigen Austrittsfenster 40 tritt ein ringförmiger Vorhang aus Löschlicht aus. Da das Löschlicht gleichzeitig auf alle in einer Abtastlinie in Umfangsrichtung liegenden Punkte der Speicherfolie einwirkt, ist schon auf Grund des Zeitfaktors (Verhältnis von Pixel zu Abtastlinie) in der Löscheinheit 14 eine stärkere Beleuchtung gegeben als über dem Ringspalt 26 der Leseeinheit. Darüberhinaus kann man das Löschlicht auch breitbandiger wählen und durch eine nicht kohärente Lichtquelle erzeugen.

Die Fluoreszenzlampe 48 kann eine Warmton-Leuchtstoffröhre sein. Mit solchen kann eine Beleuchtungsstärke von 50.000 lx erreicht werden. Zum Löschen einer Speicherfolie wird eine Lichtmenge von etwa 500.000 lx s benötigt, wenn man das Löschen synchron zum Auslesen der Speicherfolie in kurzer Zeit erreichen will.

Erfolgen Auslesen und Löschen in einem kombinierten Auslese- und Löschgerät mit einer gemeinsamen Transporteinrichtung, welche die Speicherfolien durch die Leseeinheit und die Löscheinheit bewegt, so ist die Löschzeit im Wesentlichen gleich der Auslesezeit plus derjenigen Zeit, die zum Überbrücken des Abstandes zwischen Leseeinheit und Löscheinheit benötigt wird.

Die Zeit zum Auslesen einer Speicherfolie ergibt sich aus der Nachleuchtdauer des Speicherleuchtstoffes. Enthält die lichtempfindliche Schicht einer Speicherfolie als Speicherleuchtstoff ein BaFBr:Eu-Material, so beträgt die Nachleuchtdauer nach dem Bestrahlen mit dem zum Auslesen verwendeten Laserlicht 880 ns. Hieraus ergibt sich eine Auslesedauer für Speicherfolien zur intraoralen Anwendung in der Größenordnung von 10s.

Leuchtstoffröhren eignen sich als Lichtquellen für die Löscheinheit 14 auch deshalb, weil sie einen hohen energetischen Wirkungsgrad aufweisen. An ihnen ist ferner vorteilhaft, dass sie sich nur wenig erwärmen, so dass die Speicherfolien beim Löschen nicht durch Hitzeeinwirkung beschädigt werden.

Um für das Löschen nicht dienliche Anteile im Spektrum der Fluoreszenzlampe 48 auszuschalten, kann um diese herum eine Kunststoff-Folie angeordnet werden, die als optisches Kantenfilter arbeitet. Dies ist so ausgewählt, dass nur die zum Löschen erwünschten Spektralanteile mit Wellenlängen oberhalb von 480 nm durchlässt.

Beim hier betrachteten Beispiel ist statt einer solchen Kunststoff-Folie das Austrittsfenster 40 aus einem transparenten Material hergestellt, welches entsprechende Filtereigenschaften aufweist.

Ein solches Kantenfilter ist auch im Hinblick auf eine zusätzliche Lichtsperre zwischen Löscheinheit und Leseeinheit vorteilhaft, da vor dem Fotodetektor der Leseeinheit ein Blau-Filter für Fluoreszenzlicht angeordnet ist, welches nur Wellenlängen unterhalb von etwa 450 nm hindurchlässt. Dieses Blau-Filter blockt das Löschlicht ab.

Eine perfekte Löschung beim Auslesen noch nicht deaktivierter Speicherzentren ist auch deshalb gewährleistet, weil die axiale Abmessung des Austrittsfensters 40 deutlich größer ist als diejenige des Ringspaltes 26 bzw. der Durchmesser des Auslesestrahles 28.

In der Praxis sind aus den genannten Gründen axiale Abmessungen des Austrittsfensters 40, die etwa 20 bis 100 mal größer sind als die des Ringspaltes 26 gut ausreichend.

Beim Hinüberbewegen über das Austrittsfenster 40 werden somit die beim Auslesen noch nicht deaktivierten Speicherzentren gelöscht, und wenn die Speicherfolie 30 dann vollständig über das Austrittsfenster 40 hinweggelaufen ist, kann sie direkt für eine neue Röntgenbelichtung verwendet werden.

Um zu vermeiden, dass durch das Austrittsfenster 40 austretendes Löschlicht (und beim Löschen entstehendes Fluoreszenzlicht) zu der Leseeinheit 12 zurückgelangen, wo sie das Auslesen nachfolgender Bildbereiche stören könnten, ist zwischen der Leseeinheit 12 und der Löscheinheit 14 eine ringförmige Lichtsperre 46 vorgesehen.

In der Zeichnung ist die Lichtsperre 46 der besseren Darstellbarkeit halber mit gegenüber der Praxis deutlich vergrößerten Abmessungen in Speicherfolien-Förderrichtung dargestellt. Bei praktischen Beispielen wird man die Lichtsperre 46 in Folien-Förderrichtung gerade so lang wählen, wie im Hinblick auf eine ausreichende Effektivität der Lichtsperre notwendig.

Je näher man das Austrittsfenster 40 an den Ringspalt 26 rücken kann, um so weniger unterscheidet sich die für das Auslesen und Löschen benötigte Gesamtzeit von derjenigen Zeit, die zum reinen Auslesen benötigt wird.

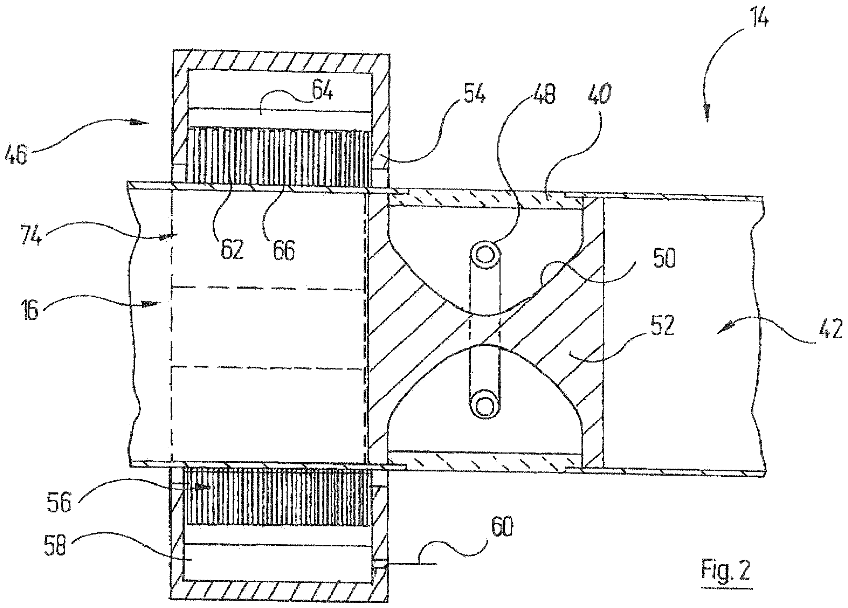

Figur 2 zeigt ein praktisches Beispiel für eine Löscheinrichtung mit vorgeschalteter Lichtsperre.

Hinter dem Austrittsfenster 40, welches als ringförmiger Glas- oder Kunststoffkörper ausgebildet ist, befindet sich eine ringförmige Fluoreszenzlampe 48. Hinter dieser befindet sich ein torusförmiger Parabolspiegel 50, der durch die mattierte Oberfläche eines rotationssymmetrischen Spiegelkörpers 52 gebildet ist. Dieser ist bündig ins Innere der Enden der Aufspanntische 16 und 39 von Ausleseeinheit 12 bzw. Löscheinheit 14 eingesetzt.

Die Lichtsperre 46 hat ein Gehäuse 54, welches ein zylindrisches Lamellenpaket 56 unter radialem Spiel umgibt, so dass außerhalb des Lamellenpaketes ein Ringraum 58 erhalten wird, der mit einer Kühlgas-Speiseleitung 60 in Verbindung steht.

Das Lamellenpaket 56 besteht aus alternierend nebeneinander gestapelten ersten Lamellenscheiben 62 und zweiten Lamellenscheiben 64. Diese haben gleichen Außendurchmesser, jedoch stark unterschiedlichen Innendurchmesser, so dass man zwischen den Lamellen 62 und 64 axial flache ringförmige Taschen 66 erhält, deren radiale Erstreckung groß gegenüber ihrer axialen Abmessung ist.

Die Lamellenscheiben 62, 64 sind schwarz lackiert oder auf andere Weise mit einer Oberfläche versehen, welche von der Fluoreszenzlampe 48 abgegebenes Löschlicht und vorzugsweise auch Fluoreszenzlicht absorbiert.

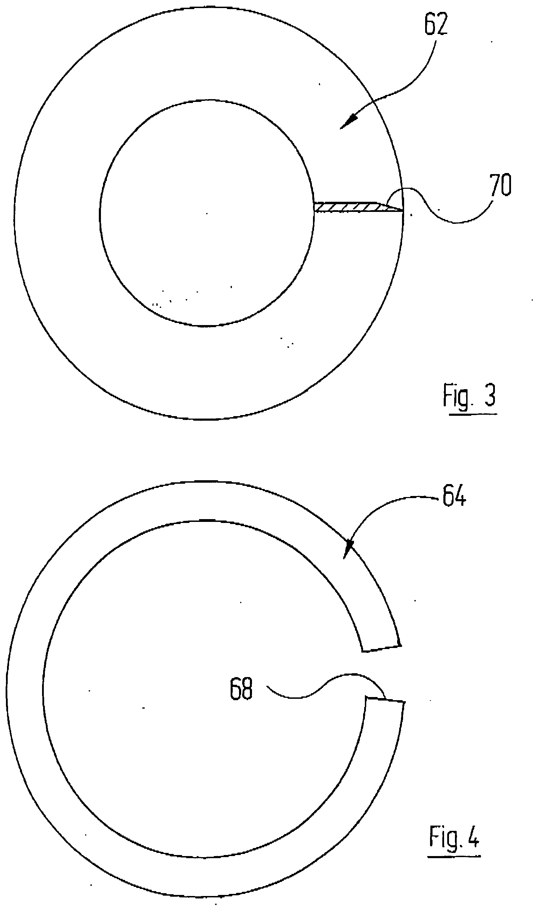

Die beiden Typen von Lamellenscheiben 62 und 64 sind in Figur 3 näher gezeigt.

Die kleine radiale Breite aufweisenden Lamellenscheiben sind jeweils an einer Stelle ihres Umfanges unterbrochen, wie bei 68 gezeigt. Auf diese Weise kann bei Kühlgasbeaufschlagung des Ringraumes 58 Kühlgas vom Boden der Taschen 66 zu deren offenem Ende hinströmen.

Die Lichtsperre 46 arbeitet so, dass sie von der Oberfläche des Aufspanntisches 16 reflektiertes Licht oder von einer Speicherfolie reflektiertes Licht absorbiert.

Auch schwarz oder sonst lichtabsorbierend eingefärbten Flächen ist aber noch eine gewisse Restreflexion eigen. Aus diesem Grunde werden die radial innenliegenden Flächen der Ringöffnungen dadurch klein gehalten, dass man den ersten Lamellenscheiben 62 nur sehr geringe axiale Abmessung gibt. Typischerweise können diese Lamellen aus einem ähnlichen Material wie Rasierklingen hergestellt sein, haben also nur eine Dicke von 0,1 mm.

Um die Größe der Stirnflächen weiter zu reduzieren, kann man die inneren Ränder der Lamellenscheiben 62 schneidenähnlich zuschärfen, wie in Figur 3 bei 70 angedeutet, wobei im Scheibenstapel die angewinkelte Seite der Anschärfung 70 zu der Löscheinheit 14 weist.

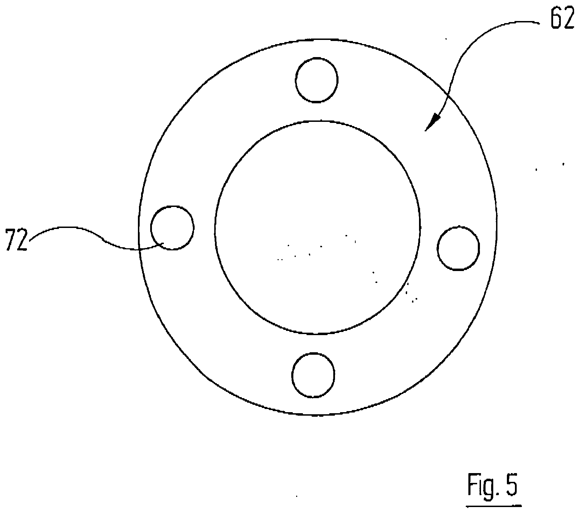

Alternativ kann man das Lamellenpaket 56 auch aus Lamellenscheiben gleichen Typs aufweisen, wenn man diese mit vorspringenden Abschnitten versieht, wie in Figur 5 gezeigt. Dort sind in einer Lamellscheibe 62, wie 5 sie auch schon in Figur 3 gezeigt war, kreisförmige Bereiche 72 axial herausgedrückt.

Diese Ausdrückungen können auch größere axiale Abmessungen haben als die Dicke der Lamellenscheibe 62, so dass man größere axiale Abmessung aufweisende Taschen 66 erhält. Wie beim Beispiel nach Figur 4, bei welchem die Lamellenscheiben 62 und 64 gleich dick waren, kann man die axiale Abmessung der herausgedrückten kreisförmigen Bereiche 72 aber auch im Wesentlichen gleich groß wie die Dicke der Lamellenscheibe 62 wählen und erhält dann ein Lamellenpaket 56, wie es in Figur 2 gezeigt ist, mit dem einzigen Unterschied, dass die Taschen 66 abgesehen von kleinen Umfangsunterbrechungen durchgehend mit dem Ringraum 58 in Verbindung stehen. Hierdurch erhält man eine in Umfangsrichtung gut gleichmäßige Kühlung aller Lamellenscheiben.

Es versteht sich, dass die Lameliehscheiben gemäß Figur 5 zur Bildung des Lamellenpaketes 56 so hintereinander gestapelt werden, dass ihre herausgedrückten Bereiche 72 um 45° gegeneinander versetzt sind.

Falls gewünscht, kann man eine Lichtsperre der oben beschriebenen Art auch auf der Innenseite des Aufspanntisches 16 vorsehen, wie gestrichelt bei 74 angedeutet.

Die radiale Lage der inneren Ränder der Lamellenscheiben 62 (und entsprechend die Radien der außenliegenden Ränder ähnlicher Lamellenscheiben in einer Lichtsperre 74) ist so gewählt, dass sie einerseits möglichst nahe bei der Außenseite einer vorbeibewegten Speicherfolie 30 liegen, andererseits ein direkter Kontakt mit Sicherheit vermieden wird.

In der Praxis können die Abstände zwischen den inneren Rändern der Lamellenscheiben 62 (bzw. der äußeren Ränder von Lamellenscheiben einer Lichtsperre 74) einen Abstand von 0,1 bis 0,5 mm von der benachbarten Oberfläche der Speicherfolie 30 aufweisen. Auf diese Weise arbeitet die Lichtsperre 46 berührungsfrei und stellt durch die tiefen absorbierenden Taschen 66 trotzdem sicher, dass kein Licht von der Löscheinheit 14 zu der Leseeinheit 12 gelangt.

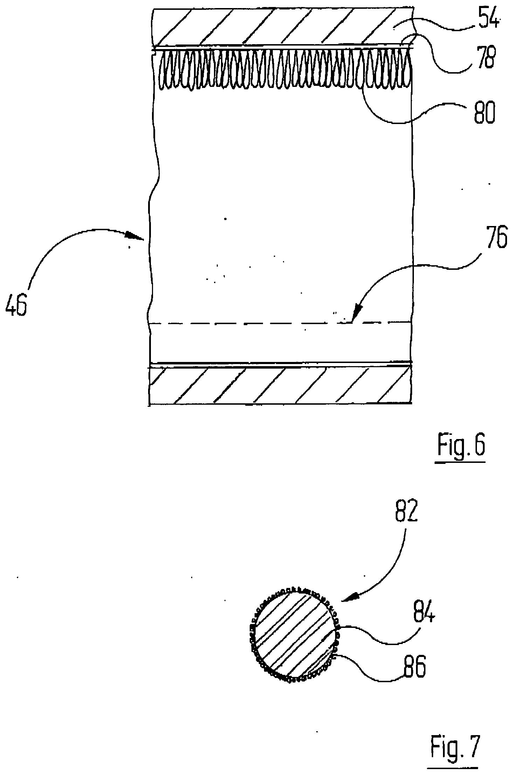

Alternativ zu einer Lichtsperre 46 mit einem Lamellenpaket 56, wie sie oben beschrieben wurde, kann man auch eine Lichtsperre 46 gemäß Figur 6 verwenden, deren Herstellungskosten nur gering sind.

Auf die Innenseite des hülsenförmigen Gehäuses 54 ist direkt eine Schicht eines Polschlingengewebes 76 aufgebracht. Dieses besteht aus einer Gewebeschicht 78 und einer Vielzahl von dieser getragender Polschlingen 80.

Die Höhe der Polschlingen 80 ist so gewählt, dass sie nur kleinen Abstand von der benachbarten Oberseite einer vorbeibewegten Speicherfolie aufweisen.

Da die Polschlingen 80 geschlossen sind, haben sie keine durch Abschneiden von Fasern entstandenen scharfen Kanten, die bei häufigem Vorbeilaufen einer Speicherfolie Kratz- oder Schleifspuren auf dieser erzeugen könnten.

Wie aus der Zeichnung ersichtlich, sind die Polschlingen 80 dicht an dicht gesetzt, so dass sie sich gegenseitig gegen Schwerkrafteinwirkung stabilisieren. Die Polschlingen bleiben somit über den gesamten Umfang der Innenfläche des Gehäuses 54 im Wesentlichen radial ausgerichtet.

Die Polschlingen 80 sind aus einem flexiblen Material hergestellt, welches im Volumen pigmentiert ist. Als Pigmente kommen dabei insbesondere feine Ruß- und schwarzer Kunststoffstaub in Frage, wie er zum Beispiel in Tonerpudern verwendet wird.

Um wiederum Reflexionen an der Faseroberfläche zu vermeiden wird diese mattiert, was in an sich bei der Ausrüstung von Kunststoff-Folien bekannter Weise durch chemisches Ätzen oder Behandeln in einer Gasentladung erfolgen kann.

Alternativ kann man, wie in Figur 7 gezeigt, auch ein Fadenmaterial 82 zur Herstellung der Polschlingen verwenden, welches eine thermoplastische Seele und hierauf festgeschweißte schwarze Absorberpartikel 86 aufweist.

Ein solches Fadenmaterial kann man zum Beispiel dadurch erzeugen, dass man es durch ein heißes Puderbett aus den Absorberpartikeln zieht und nach dieser Behandlung nicht fest gebundene Absorberpartikel 86 abbläst.

Anstelle der Fluoreszenzlampe 48 können auch andere Lichtquellen verwendet werden, deren Licht einen geringen Anteil im blauen und im UV aufweist, zum Beispiel eine Fluoreszenzlampe, deren Glasrohre mit einem Rotleuchtstoff beschichtet ist.

Um noch kürzere Löschzeiten realieren zu können, kann auch eine Halogenstablampe eingesetzt werden. Sie hat eine höhere Leistungsaufnahme und eine höhere Lichtabgabeintensität bezogen auf die Fläche des Emitters (Glühdraht)

Die die Lichtquelle umgebenden Wände der Löscheinheit 14 sind vorzugsweise mit einem für das Löschlicht sehr gut reflektierenden Material beschichtet, welches diffus reflektiert. Gut geeignet sind zum Beispiel weißer oder gelber Schaumstoff, weißes Teflon und blank poliertes Aluminiumblech. Eine besonders gute Reflektionsschicht besteht aus einem BaSO₄-Material, insbesondere einem solchen Material, das mit einem Gelbfarbstoff versetzt ist Mit diesem Material kann dann ein beliebiges Wandmaterial beschichtet sein.

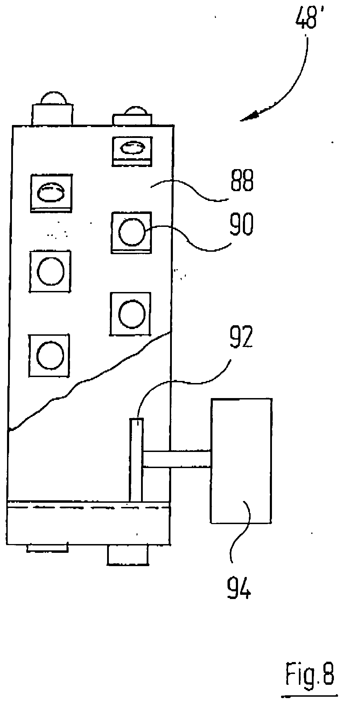

Neben den oben angesprochenen herkömmlichen Lichtquellen eignen sich für das Löschen der Speicherfolien aber auch Festkörper-Lichtquellen (LEDs). Diese sind derzeit nur als diskrete Einzelelemente mit verhältnismäßig kleinen Abmessungen verfügbar. Um das ganze ringförmige Austrittsfenster 40 mit einem ringförmigen Lichtvorhang auszufüllen, wird anstelle der Fluoreszenzlampe 48 eine ringförmige LED-Lichtquelle 48' verwendet, wie sie in Figur 8 gezeigt ist.

Auf der Außenseite eines Tragringes 88 sind in Umfangs-richtung regelmäßig verteilt Leuchtdioden 90 angeordnet, deren Arbeitswellenlänge oberhalb von 480 nm (typischerweise bei 630 nm) liegt, so dass ihr Licht für Löschzwecke geeignet ist, das Auslesen der Speicherfolie aber nicht nachteilig beeinträchtigt.

Im Hinblick auf die Gleichmäßigkeit der Ausleuchtung des Austrittsfensters sind vorzugsweise zwei axial beabstandete Ringe von Leuchtdioden 90 vorgesehen, in denen die einzelnen Leuchtdioden um eine halbe Teilung gegeneinander versetzt sind.

Es versteht sich, dass die Leuchtdioden in einem geeigneten Abstand hinter dem Austrittsfenster 40 liegen, derart, dass sich die von ihnen abgegebenen Lichtkegel auf der Außenfläche des Austrittsfensters 40 gerade überlappen.

Zur noch weiteren Vergleichmaßigung der Ausleuchtung des Austrittsfensters 40 kann das Austrittsfenster 40 mattiert sein, und/oder man kann den Tragring 88 auch mit einer Innenverzahnung versehen und über ein Ritzel 92 drehen, so dass Restwelligkeiten der Intensitätsverteilung in Umfangsrichtung durch zeitliche Mittelung herausfallen. Damit ist eine gleichförmig gute Löschung der Speicherfolie 30 beim Hindurchlaufen durch die Löscheinheit 14 gewährleistet.

Werden in der Löscheinheit 14 Speicherfolien stark unterschiedlicher Abmessungen gelöscht, so kann man die Leuchtdioden 90 auch in Umfangsrichtung in Gruppen unterteilen und zum Löschen nur jeweils diejenigen Gruppen aktivieren, die zusammen die Breite der Speicherfolie 30 abdecken.

Der Tragring 88 kann zur Verbesserung der Wärmeabfuhr wie die Leuchtdioden 90 aus gut wärmeleitendem Material hergestellt sein, z. B. aus Aluminium. Ggf. kann der Tragring 88 auch durch Anströmen mit Luft oder durch ein in einem internen Kühlmittelkanal umgewälztes flüssiges Kühlmittel gekühlt werden.

Ist der Scanner ein Flachbildscanner, so kann man eine (ggf. auch zusätzlich zu den oben beschriebenen Abschirmmaßnahmen zu verwendende) Abschirmung der Ausleseeinheit 12 gegen Löschlicht dadurch erzeugen, dass man die Speicherfolie vor der Leseeinheit in voneinander beabstandeten, vorzugsweise zueinander parallelen, Ebenen führt.

Ein derartiges Ausführungsbeispiel ist in Figur 9 gezeigt. Teile des Auslese- und Löschgerätes, die von der Funktion her solchen bei den oben beschriebenen Ausführungsbeispielen entsprechen, sind wieder mit den gleichen Bezugszeichen versehen und brauchen nachstehend nicht nochmals detailliert beschrieben zu werden.

Das in Figur 9 gezeigte Auslese- und Löschgerat 10 ist als Flachbildscanner ausgebildet. Die Speicherfolie 30 wird somit in ebener Konfiguration durch die Ausleseeinheit 12 bewegt.

Hinter der Ausleseeinheit 12 sind nun drei Walzen 96, 98, 100 vorgesehen, welche die Speicherfolie 30 aus einer ersten Förderebene F1, die bei der Ausleseeinheit 12 gilt, in eine zweite parallele nach oben beabstandete Förderebene F2 umlenkt, die bei der der Löscheinheit 14 gilt.

Durch diese Stufe im Förderweg ist die Gefahr, dass von der Löscheinheit 14 abgegebenes Löschlicht, welches auf Leckpfaden die Umgebung erreicht, nicht die Ausleseeinheit 12 erreicht. Erstrecken sich die Walzen 96 bis 100 über die gesamte Breite der Speicherfolie 30, stellen die Walzen 96, 98, 100 darüber hinaus zusätzliche das Licht abschottende Blenden dar, die praktisch abstands-frei an der Speicherfolie 30 angreifen.

Es ist bekannt, dass sowohl breitbandige Löschlichtquellen wie Fluoreszenzlampen, Halogenlampen oder Xenonlampen einem Alterungsprozess unterliegen, durch den die abgegebene Lichtmenge reduziert wird. Auch bei schmalbandigen Löschlichtquellen wie LEDs hat man eine mit zunehmender Betriebsdauer einhergehende Abnahme des abgegebenen Lichtstromes.

Um dem zu begegnen, kann man, wie ebenfalls in Figur 9 gezeigt, in der Löscheinheit 14 eine Fotodiode 102 oder ein anderes lichtempfindliches Element vorsehen, dessen Ausgangssignal sich gemäß der Änderung des von der Lampe erzeugten Lichtstromes ändert. Das Ausgangssignal der Fotodiode 102 kann man dann dadurch verwenden, entweder den Betriebsstrom der Lichtquelle so zu steigern, dass der abgegebene Lichtstrom unverändert bleibt, oder auch dazu, die Fördergeschwindigkeit der Speicherfolie 30 im Bereich der Löscheinheit 14 so zu verringern, dass auch bei herabgesetztem Lichtstrom die gleiche Bestrahlungsdosis erhalten wird.

Bei Verwendung einer schmalbandigen Löschlichtquelle kann man die Peak-Wellenlängen an die Peak-Wellenlänge der Absorption der F-Zentren des Phosphormateriales anpassen, um ein besonders effizientes Löschen verbliebener Bildreste zu erhalten.

In weiterer Abwandlung der oben beschriebenen Ausführungsbeispiele kann man den Winkelbereich der Löschlampe unter Verwendung von optischen Elementen (Spiegel, Linsen) auf diejenigen Raumbereiche beschränken, in welchen die Speicherfolie vor der Löscheinheit vorbeiläuft. Man erhält so eine Erhöhung der Intensität des Löschlichtes und entsprechend die Möglichkeit einer Verkürzung der Löschzeit.

## Patentansprüche

1. Gerät zum Auslesen von belichteten Speicherfolien (30), mit Haltemitteln (16, 42) zum Halten einer auszulesenden Speicherfolie (30) in vorgegebener Geometrie, mit einer Leseeinheit (12), welche einen in einer ersten Abtastrichtung bewegten Leselichtstrahl (28) erzeugt und Detektionsmittel zum Detektieren durch den Lesestrahl in der Speicherfolie (30) ausgelösten Fluoreszenzlichtes aufweist, und mit einer gemeinsamen Antriebseinrichtung (18, 44) zum Erzeugen einer Relativbewegung zwischen der Speicherfolie (30) und der Leseeinheit (12) in einer von der ersten Abtastrichtung verschiedenen zweiten Abtastrichtung, wobei die Speicherfolie (30) im Wesentlichen flach durch die Leseeinheit (12) bewegt wird, **dadurch gekennzeichnet, dass** in Richtung der zweiten Abtastrichtung hinter der Leseeinheit (12) und mit dieser fluchtend eine Löscheinheit (14) angeordnet ist, dass die Antriebseinrichtung (18, 44) so ausgebildet ist, dass sie sich auch über die Löscheinheit (10) erstreckt sodass die Antriebseinrichtung (18, 44) zum Erzeugen einer Relativbewegung zwischen der Speicherfolie (30) und der Löscheinheit (14) in der zweiten Abtastrichtung ausgebildet ist und das Löschen im Wesentlichen zeitgleich mit dem Auslesen erfolgt, dass zwischen der Leseeinheit (12) und der Löscheinheit (14) eine Lichtsperre (44, 46, 74) angeordnet ist und dass im Bereich zwischen der Leseeinheit (12) und der Löscheinheit (14) eine Führungseinheit (96, 98, 100) vorgesehen ist, welche eine Stufe im Förderweg der Speicherfolie (30) vorgibt und die Speicherfolie (30) aus einer ersten Förderebene (F1) in eine zweite, parallel beabstandete Förderebene (F2) umlenkt, sodass von der Löscheinheit (14) abgegebenes Löschlicht nicht die Leseeinheit (12) erreicht.

2. Gerät nach Anspruch 1, **dadurch gekennzeichnet, dass** die Lichtsperre (46) ein Paket (56) parallel unter Abstand angeordneter Löschlicht absorbierender Lamellen (62) aufweist, deren zur Speicherfolie (30) weisende Ränder von der Bahn der Speicherfolie (30) beabstandet sind.

3. Gerät nach Anspruch 2, **dadurch gekennzeichnet, dass** die Lamellen (62) auch Fluoreszenzlicht absorbieren.

4. Gerät nach Anspruch 2 oder 3 **dadurch gekennzeichnet,**
**dass** das Spiel zwischen den der Speicherfolie (30) zugewandten Rändern zumindest einiger der Lamellen (62) etwa 0,05 bis etwa 0,2 mm, vorzugsweise etwa 0,1 mm beträgt.

5. Gerät nach einem der Ansprüche 2 bis 4, **dadurch gekennzeichnet, dass** die der Bahn der Speicherfolie (30) zugewandten Ränder zumindest einiger der Lamellen (62) angeschärft (70) sind.

6. Gerät nach einem der Ansprüche 2 bis 5, **dadurch gekennzeichnet, dass** die Lamellen (62) durch dazwischenliegende zweite Lamellen (64) beabstandet sind, deren der Speicherfolie (30) zugewandte Ränder größeren Abstand von der Speicherfolie (30) aufweisen als die entsprechenden Ränder der ersten Lamellen (62).

7. Gerät nach Anspruch 6, **dadurch gekennzeichnet, dass** der Abstand zwischen den freien Rändern der zweiten Lamellen und der Bahn der Speicherfolie zumindest das 10fache, vorzugsweise etwa das 50 bis 200fache desjenigen Abstandes beträgt, der zwischen den freien Rändern der ersten Lamellen (62) und der Bahn der Speicherfolie (30) liegt.

8. Gerät nach Anspruch 6 oder 7, **dadurch gekennzeichnet,**
**dass** die zweiten Lamellen (66) Unterbrechungen (68) aufweisen, die mit einem Kühlgas-Verteilerraum (58) in Verbindung stehen.

9. Gerät nach einem der Ansprüche 2 bis 5, **dadurch gekennzeichnet, dass** die Lamellen (62) aus ihrer Ebene herausgedrückte Bereiche (72) aufweisen, über welche sie beabstandet sind.

10. Gerät nach Anspruch 9, **dadurch gekennzeichnet, dass** die Lamellen (62) in Umfangsrichtung symmetrisch mit aus ihrer Ebene herausgedrückten Bereiche (72) versehen sind und die ausgedrückten Bereiche (72) benachbarter Lamellen (62) gegeneinander versetzt sind.

11. Gerät nach einem der Ansprüche 8 bis 10, **dadurch gekennzeichnet, dass** die Umfangsfläche des Lamellenpaketes (56) mit einem Verteilerraum (58) für Kühlgas in Verbindung steht.

12. Gerät nach Anspruch 1, **dadurch gekennzeichnet, dass** die Lichtsperre (46) einen Flor (80) aus absorbierendem Textilmaterial umfasst.

13. Gerät nach Anspruch 12, **dadurch gekennzeichnet,**
**dass** der Flor (80) ein Polschlingenflor ist.

14. Gerät nach Anspruch 12 oder 13, **dadurch gekennzeichnet, dass** der Flor (80) aus einem im Volumen absorbierenden Material hergestellt ist.

15. Gerät nach Anspruch 14, **dadurch gekennzeichnet,**
**dass** das absorbierende Material auf seiner Außenseite mattiert ist.

16. Gerät nach einem der Ansprüche 12 bis 15, **dadurch gekennzeichnet, dass** die Aussenfläche des textilen Materials (82) mit absorbierenden Partikeln (86) besetzt ist.

17. Gerät nach einem der Ansprüche 1 bis 16, **dadurch gekennzeichnet, dass** eine Lichtquelle (48) der Löscheinheit (14) eine Mehrzahl derart beabstandeter Leuchtdioden (90) aufweist, dass sich ihre Lichtkegel in der Folienfläche überlappen.

18. Gerät nach Anspruch 17, **dadurch gekennzeichnet,**
**dass** die Leuchtdioden (90) in mehreren in Förderrichtung der Speicherfolie (10) beabstandeten Reihen angeordnet sind und die Dioden aufeinanderfolgender Reihen gegeneinander versetzt sind.

19. Gerät nach Anspruch 17 oder 18, **dadurch gekennzeichnet,**
**dass** die Leuchtdioden (90) auf einem Tragkörper (88) angeordnet sind, der in zur Förderrichtung der Speicherfolien senkrechter Richtung angetrieben (92, 94) ist.

20. Gerät nach einem der Ansprüche 17 bis 19, **dadurch gekennzeichnet, dass** es ein lichtempfindliches Element (102) aufweist, welches mit Löschlicht beaufschlagt ist.

21. Gerät nach Anspruch 20, **gekennzeichnet durch** eine Einrichtung zur Regelung des von der Lichtquelle (48) abgegebenen Lichtstromes, welche in Abhängigkeit vom Ausgangssignal des vom Löschlicht beaufschlagten lichtempfindlichen Elementes (102) arbeitet.

22. Gerät nach einem der Ansprüche 17 bis 21, **dadurch gekennzeichnet, dass** das Spektrum, insbesondere die Peak-Wellenlänge der Lichtquelle (48) auf das Maximum der Absorption der Speicherzentren der Speicherfolie (30) eingestellt ist.

23. Gerät nach einem der Ansprüche 17 bis 22, **gekennzeichnet durch** Mittel zum Sammeln des von der Löscheinheit (14) abgegebenen Löschlichtes auf denjenigen Raumbereich, in welchem eine Speicherfolie (30) an der Löscheinheit (14) vorbeibewegt wird.

24. Gerät nach einem der Ansprüche 17 bis 23, **dadurch gekennzeichnet, dass** die Löschlichtquelle (48) umgebende Wände der Löscheinheit (14) diffus reflektierend ausgebildet sind.

25. Gerät nach einem der Ansprüche 17 bis 24, **dadurch gekennzeichnet, dass** die Lichtquelle (48) umgebende Wände der Löscheinheit (14) mit einer Löschlicht gut reflektierenden Beschichtung versehen sind.

## Claims

1. Device for reading out exposed imaging plates (30), having retaining means (16, 42) for retaining in a predefined geometry an imaging plate (30) to be read out, having a reading unit (12) which generates a reading light beam (28) which is moved in a first scanning direction and comprises detection means for detecting fluorescent light released in the imaging plate (30) by the reading beam, and having a common drive device (18, 44) for generating a relative movement between the imaging plate (30) and the reading unit (12) in a second scanning direction which differs from the first scanning direction, wherein the imaging plate (30) is moved through the reading unit (12) in a substantially flat form, **characterised in that** an erasing unit (14) is arranged in the direction of the second scanning direction behind the reading unit (12) and aligned therewith, **in that** the drive device (18, 44) is designed in such a way that it also extends over the erasing unit (10) such that the drive device (18, 44) is configured to generate a relative movement between the imaging plate (30) and the erasing unit (14) in the second scanning direction and the erasure and the reading out take place substantially simultaneously, **in that** a light barrier (44, 46, 74) is arranged between the reading unit (12) and the erasing unit (14), and **in that** a guiding unit (96, 98, 100) is provided in the region between the reading unit (12) and the erasing unit (14), which predetermines a step in the conveying path of the imaging plate (30) and deflects the imaging plate (30) out of a first conveying plane (F1) into a second conveying plane (F2) spaced parallel thereto, such that erasing light emitted from the erasing unit (14) does not reach the reading unit (12).

2. Device according to claim 1, **characterised in that** the light barrier (46) comprises a bundle (56) of lamellae (62) which absorb erasing light and are arranged in parallel with a spacing, the edges of which pointing towards the imaging plate (30) are spaced from the trajectory of the imaging plate (30).

3. Device according to claim 2, **characterised in that** the lamellae (62) also absorb fluorescent light.

4. Device according to claim 2 or 3, **characterised in that** the clearance between the edges of at least some of the lamellae (62) facing the imaging plate (30) is approximately 0.05 mm to approximately 0.2 mm, preferably approximately 0.1 mm.

5. Device according to one of claims 2 to 4, **characterised in that** the edges of at least some of the lamellae (62) facing the trajectory of the imaging plate (30) are sharpened (70).

6. Device according to one of claims 2 to 5, **characterised in that** the lamellae (62) are spaced by intermediate second lamellae (64), the edges of which facing the imaging plate (30) are spaced further from the imaging plate (30) than the corresponding edges of the first lamellae (62).

7. Device according to claim 6, **characterised in that** the spacing between the free edges of the second lamellae and the trajectory of the imaging plate is at least 10 times, preferably approximately 50 to 200 times, the spacing between the free edges of the first lamellae (62) and the trajectory of the imaging plate (30).

8. Device according to claim 6 or 7, **characterised in that** the second lamellae (66) have interruptions (68) which are connected to a cooling gas distribution space (58).

9. Device according to one of claims 2 to 5, **characterised in that** the lamellae (62) have regions (72) that are pressed out of their plane, via which they are spaced.

10. Device according to claim 9, **characterised in that** in the peripheral direction the lamellae (62) are provided so as to be symmetrical to the regions (72) that are pressed out of their plane, and the pressed-out regions (72) of adjacent lamellae (62) are offset in relation to one another.

11. Device according to one of claims 8 to 10, **characterised in that** the peripheral surface of the lamellar bundle (56) is connected to a distribution space (58) for cooling gas.

12. Device according to claim 1, **characterised in that** the light barrier (46) comprises a pile (80) made of absorbent textile material.

13. Device according to claim 12, **characterised in that** the pile (80) is a loop pile.

14. Device according to claim 12 or 13, **characterised in that** the pile (80) is produced from a material that absorbs in volume.

15. Device according to claim 14, **characterised in that** the absorbent material is matt-finished on the outer side thereof.

16. Device according to one of claims 12 to 15, **characterised in that** the outer surface of the textile material (82) is studded with absorbent particles (86).

17. Device according to one of claims 1 to 16, **characterised in that** a light source (48) of the erasing unit (14) comprises a plurality of light-emitting diodes (90) which are spaced in such a way that the light cones thereof overlap on the surface of the plate.

18. Device according to claim 17, **characterised in that** the light-emitting diodes (90) are arranged in several rows spaced in the conveying direction of the imaging plate (10), and the diodes of consecutive rows are offset in relation to one another.

19. Device according to claim 17 or 18, **characterised in that** the light-emitting diodes (90) are arranged on a carrying body (88) which is driven (92, 94) in a direction perpendicular to the conveying direction of the imaging plates.

20. Device according to one of claims 17 to 19, **characterised in that** it comprises a light-sensitive element (102) which has erasing light applied thereto.

21. Device according to claim 20, **characterised by** a device for regulating the luminous flux emitted by the light source (48), which operates as a function of the output signal of the light-sensitive element (102) which has erasing light applied thereto.

22. Device according to one of claims 17 to 21, **characterised in that** the spectrum, in particular the peak wavelength of the light source (48), is set to the maximum absorption of the storage centres of the imaging plate (30).

23. Device according to one of claims 17 to 22, **characterised by** means for collecting the erasing light emitted by the erasing unit (14) onto the spatial region in which an imaging plate (30) is moved past the erasing unit (14).

24. Device according to one of claims 17 to 23, **characterised in that** the walls of the erasing unit (14) surrounding the erasing light source (48) are designed to be diffusely reflective.

25. Device according to one of claims 17 to 24, **characterised in that** the walls of the erasing unit (14) surrounding the light source (48) are provided with a coating that reflects erasing light well.

## Revendications

1. Appareil de lecture de disques (30) d'enregistrement exposés, comprenant des moyens (16, 42) de maintien, pour maintenir un disque (30) d'enregistrement à lire dans une géométrie donnée à l'avance, comprenant une unité (12) de lecture, qui produit un rayon (28) lumineux de lecture déplacé dans un premier sens de balayage et qui a des moyens de détection pour détecter, par le faisceau de lecture, de la lumière de fluorescence déclenchée dans le disque (30) d'enregistrement, et comprenant un dispositif (18, 44) d'entraînement commun, pour produire un déplacement relatif entre le disque (30) d'enregistrement et l'unité (12) de lecture dans une deuxième direction de balayage différente de la première direction de balayage, le disque (30) d'enregistrement étant déplacé, de manière sensiblement plate, dans l'unité (12) de lecture, **caractérisé en ce qu'**une unité (14) d'effacement est disposée derrière, dans la direction de la deuxième direction de balayage, l'unité (12) de lecture et en étant alignée sur celle-ci, **en ce que** le dispositif (18, 44) d'entraînement est constitué de manière à s'étendre aussi sur l'unité (10) d'effacement, de manière à ce que le dispositif (18, 44) d'entraînement soit constitué pour produire un déplacement relatif entre le disque (30) d'enregistrement et l'unité (14) d'effacement dans la deuxième direction de balayage et de manière à ce que l'effacement s'effectue sensiblement en même temps que la lecture, **en ce qu'**une barrière (44, 46, 74) à la lumière est disposée entre l'unité (12) de lecture et l'unité (14) d'effacement et **en ce qu'**il est prévu, dans la partie entre l'unité (12) de lecture et l'unité (14) d'effacement, une unité (96, 98, 100) de guidage, qui prescrit un degré dans le trajet de déplacement relatif du disque (30) d'enregistrement et qui dévie le disque (30) d'enregistrement d'un premier plan (F1) de transport dans un deuxième plan (F2) de transport, à distance parallèlement, de sorte que de la lumière d'effacement, émise par l'unité (14) d'effacement, n'atteigne pas l'unité (12) de lecture.

2. Appareil suivant la revendication 1, **caractérisé en ce que** la barrière (46) à la lumière a un paquet (56) de lamelles (62), qui sont parallèles à distance entre elles, qui absorbent de la lumière d'effacement et dont les bords, tournés vers le disque (30) d'enregistrement, sont à distance du chemin du disque (30) d'enregistrement.

3. Appareil suivant la revendication 2, **caractérisé en ce que** les lamelles (62) absorbent aussi de la lumière de fluorescence.

4. Appareil suivant la revendication 2 ou 3, **caractérisé en ce que** le jeu, entre les bords, tournés vers le disque (30) d'enregistrement, d'au moins certaines lamelles (62), va d'environ 0,05 à environ 0,2 mm, en étant de préférence d'environ 0,1 mm.

5. Appareil suivant l'une des revendications 2 à 4, **caractérisé en ce que** les bords, tournés vers le chemin du disque (30) d'enregistrement, d'au moins certaines lamelles (62) sont biseautés (70).

6. Appareil suivant l'une des revendications 2 à 5, **caractérisé en ce que** les lamelles (62) sont mises à distance par des deuxièmes lamelles (64) intermédiaires, dont les bords, tournés vers le disque (30) d'enregistrement, sont à une distance plus grande du disque (30) d'enregistrement que les bords correspondants des premières lamelles (62).

7. Appareil suivant la revendication 6, **caractérisé en ce que** la distance, entre les bords libres des deuxièmes lamelles et le chemin du disque d'enregistrement représente au moins 10 fois, de préférence environ de 50 à 200 fois, la distance entre les bords libres des premières lamelles (62) et le chemin du disque (30) d'enregistrement.

8. Appareil suivant la revendication 6 ou 7, **caractérisé en ce que** les deuxièmes lamelles (66) ont des interruptions (68), qui communiquent avec un espace (58) de répartition de gaz de refroidissement.

9. Appareil suivant l'une des revendications 2 à 5, **caractérisé en ce que** les lamelles (62) ont des parties (72), qui sont repoussées de leur plan et par lesquelles elles sont mises à distance.

10. Appareil suivant la revendication 9, **caractérisé en ce que** les lamelles (62) sont pourvues, dans la direction du pourtour, de manière symétrique, de parties (72), qui sont repoussées de leur plan et les parties (72) repoussées de lamelles (62) voisines sont décalées les unes par rapport aux autres.

11. Appareil suivant l'une des revendications 8 à 10, **caractérisé en ce que** la surface de pourtour du paquet (56) de lamelles communique avec un espace (58) de répartition de gaz de refroidissement.

12. Appareil suivant la revendication 1, **caractérisé en ce que** la barrière (46) à la lumière comprend un voile (80) de matière textile absorbante.

13. Appareil suivant la revendication 12, **caractérisé en ce que** le voile (80) est un voile à boucles.

14. Appareil suivant la revendication 12 ou 13, **caractérisé en ce que** le voile (80) est fabriqué en une matière absorbante en volume.

15. Appareil suivant la revendication 14, **caractérisé en ce que** la matière absorbante est rendue mate sur sa face extérieure.

16. Appareil suivant l'une des revendications 12 à 15, **caractérisé en ce que** la surface extérieure de la matière (82) textile est garnie de particules (86) absorbantes.

17. Appareil suivant l'une des revendications 1 à 16, **caractérisé en ce qu'**une source (48) lumineuse de l'unité (14) d'effacement a une pluralité de diodes (90) électroluminescentes, à distance les unes des autres, de manière à ce que leurs cônes lumineux se chevauchent dans la surface du disque.

18. Appareil suivant la revendication 17, **caractérisé en ce que** les diodes (90) électroluminescentes sont disposées en plusieurs rangées à distance dans la direction de transport du disque (10) d'enregistrement et les diodes de rangées successives sont décalées les unes par rapport aux autres.

19. Appareil suivant la revendication 17 ou 18, **caractérisé en ce que** les diodes (90) électroluminescentes sont disposées sur un corps (88) de support, qui est entraîné (92, 94) dans une direction perpendiculaire à la direction de transport des disques d'enregistrement.

20. Appareil suivant l'une des revendications 17 à 19, **caractérisé en ce qu'**il a un élément (102) sensible à la lumière, soumis à de la lumière d'effacement.

21. Appareil suivant la revendication 20, **caractérisé par** un dispositif de régulation du flux lumineux émis par la source (48) lumineuse, dispositif qui opère en fonction du signal de sortie de l'élément (102) sensible à la lumière soumis à de la lumière d'effacement.

22. Appareil suivant l'une des revendications 17 à 21, **caractérisé en ce que** le spectre, notamment la longueur d'onde de crête de la source (48) lumineuse est réglé sur le maximum de l'absorption des centres d'enregistrement du disque (30) d'enregistrement.

23. Appareil suivant l'une des revendications 17 à 22, **caractérisé par** des moyens pour recueillir, sur la partie de l'espace dans laquelle un disque (30) d'enregistrement passe devant l'unité (14) d'effacement, la lumière d'effacement émise par l'unité (14) d'effacement.

24. Appareil suivant l'une des revendications 17 à 23, **caractérisé en ce que** les parois, entourant la source (48) lumineuse d'effacement, de l'unité (14) d'effacement sont constituées de manière réfléchissante de façon diffuse.

25. Appareil suivant l'une des revendications 17 à 24, **caractérisé en ce que** les parois, entourant la source (48) lumineuse, de l'unité (14) d'effacement sont pourvues d'un revêtement réfléchissant bien de la lumière d'effacement.
